# EUROPEAN PATENT SPECIFICATION

(11) **EP 4 197 776 B1**
(45) Date of publication and mention of the grant of the patent: **23.07.2025**
(21) Application number: 22211792.1
(22) Date of filing: 06.12.2022
(51) Int. Cl.: B32B 5/02, B32B 5/06, B32B 5/10, B29B 11/16, B29C 70/02, B29C 70/06, D03D 25/00, C04B 35/80, F01D 5/18

(54) **REINFORCING FIBERS FOR USE IN CERAMIC MATRIX COMPOSITES, METHODS OF MANUFACTURE AND ARTICLES COMPRISING THE SAME**
VERSTÄRKUNGSFASERN ZUR VERWENDUNG IN KERAMIKMATRIXVERBUNDSTOFFEN, VERFAHREN ZUR HERSTELLUNG UND ARTIKEL DAMIT
FIBRES DE RENFORCEMENT POUR UTILISATION DANS DES COMPOSITES À MATRICE CÉRAMIQUE, PROCÉDÉS DE FABRICATION ET ARTICLES LES COMPRENANT

(30) Priority: 17.12.2021 US 202117554419
(43) Date of publication of application: 21.06.2023
(73) Proprietor: RTX Corporation, Farmington, CT 06032 (US)
(72) Inventor: BANHOS, Jonas S., Rocky Hill, 06067 (US); KIM, Russell, Glastonbury, 06033 (US); ROACH, James T., Vernon, 06066 (US)
(74) Representative: Dehns

(56) References cited:
- US-A1- 2008 261 474
- US-A1- 2018 312 950

## Description

### BACKGROUND

This disclosure relates to reinforcing fibers for use in ceramic matrix composites, methods of manufacture thereof and articles comprising the same. In particular, the reinforcing fiber is used to reinforce the region around cooling holes in ceramic matrix composites.

Preforms are used for the fabrication of ceramic matrix composite (CMC) structures using chemical vapor infiltration (CVI), polymer infiltration pyrolysis (PIP) and melt infiltration (MI). A preform generally comprises a plurality of plies which are made from a fabric. The fabric comprises fibers, which can be unidirectional or woven (e.g., plain weave, 5 Harness Satin Weave, 8 Harness Satin Weave, twill). These fibers are often manufactured from ceramics

Chemical vapor infiltration (CVI) is a ceramic engineering process whereby matrix material is infiltrated into fibrous preforms by the use of reactive gases at elevated temperature to form fiber-reinforced composites. CVI can be applied to the production of carbon-carbon composites and ceramic-matrix composites. Chemical vapor infiltration (CVI) can potentially be used at temperatures of up to and greater than 2700°F. Polymer infiltration pyrolysis (PIP) comprises the infiltration of a low viscosity polymer into the fiber structure, followed by pyrolysis. Under pyrolysis, the polymer precursor is heated in an inert atmosphere and transformed into a ceramic due to its decomposition. Melt infiltration is based on the infiltration of porous matrices with the melt of an active phase or precursor. These ceramic matrix composites are used in a variety of high temperature applications such as turbine blades, vanes, and so on.

When used in such a gas turbine, the ceramic matrix composite can be subjected to high temperatures and extreme thermal gradients. The high temperatures and stress caused by the extreme thermal gradient can lead to a breakdown in the ceramic matrix composite component. In order to reduce the stress and prevent overheating, cooling holes are often used in the ceramic matrix composite components. The cooling hole permits the transport of cooling gases through the component. Cooling gases reduce the temperature of the components and prevent the formation of large steep thermal gradients which can eventually lead to a reduction in the life cycle of the component.

Such cooling holes are often machined (via techniques such as drilling, milling, laser, and the like) into the surface of the ceramic matrix composite to allow cooling air to circulate through. This air circulation reduces the stress and provides better temperature control. The machining involves the application of a high amount of stress on the fibers of the ceramic matrix composite, often resulting in cracks in the ceramic matrix composite around the resulting cooling hole. These cracks can propagate in some form, often linking up with cracks in other nearby cooling holes to create larger cracks in the ceramic matrix composite. Cracks can result in additional damage to the composite which is undesirable. These cracks can cause poor performance, ultimately reducing the service life of the component.

US 2008/261474 A1 discloses a prior art method of reinforcing a composite preform as set forth in the preamble of claim 1.

US 2018/312950 A1 discloses a prior art sacrificial 3-dimensional weaving method and ceramic matrix composites formed therefrom.

### SUMMARY

From one aspect, there is provided a method of reinforcing a composite preform as recited in claim 1.

There is also provided an article as recited in claim 6.

Features of embodiments are set forth in the dependent claims.

### BRIEF DESCRIPTION OF THE DRAWINGS

The following descriptions should not be considered limiting in any way. With reference to the accompanying drawings, like elements are numbered alike:
FIG. 1 is a side view of a preform that comprises four 2-dimensional plies without cooling holes;
FIG. 2A is an isometric side view of the preform with the z-fibers woven around the cooling holes;
FIG. 2B is a side view of the preform with the z-fibers woven around the cooling holes;
FIG. 3A is a top isometric view of a preform with the z-fibers woven around the cooling holes in a symmetrical alternating arrangement;
FIG. 3B is a top view of a preform with the z-fibers woven around the cooling holes; and
FIG. 4 is a isometric view of the leading edge of an airfoil with cooling holes that are surrounded by z-fibers.

### DETAILED DESCRIPTION

A detailed description of one or more embodiments of the disclosed apparatus and method are presented herein by way of exemplification and not limitation with reference to the Figures.

Disclosed herein is a ceramic composite matrix that comprises a fiber reinforcement in regions of the composite proximate to a cooling hole. Disclosed herein too is a method that comprises adding 3-D z-fiber tows that are woven at precise distances of an intended cooling hole row arrangement during the formation of a CMC preform. After densification, holes would be drilled between the z-fibers. This methodology is advantageous in that it adds a strengthening mechanism to the surrounding hole region to prevent crack linkage between holes. In this method, precise spacing and hole size guidelines are determined prior to layup of the preform.

As noted above, current airfoil design incorporated cooling holes machined (e.g., drilled, slotted, and the like) into the CMC material in order to alleviate thermal stresses generated during operation. However, these drilled cooling holes may themselves act as stress concentrators due to fiber breakage and rupture that may occur during the machining operation. The stress concentration created may significantly impact the life of the part where cooling hole fatigue stress cracks initiate at locations leading to further "linking" of cracks and possibly component failure. It is therefore desirable to strengthen the region around cooling holes to prevent crack linkage between holes and consequently increase life cycle of the component. Cooling gases are transported through the cooling holes to reduce the temperature of the components and prevent the formation of large steep thermal gradients, which can eventually lead to a reduction in the life cycle of the component.

The method comprises weaving 3-D z-fibers tows into a zone where intended cooling holes are to be machined (e.g., via drilling, slotting, milling, and the like) at. Z-fibers are typically fibers added in the through-thickness direction of an article or component prior to densification of the precursors (that eventually form the ceramic matrix). Fibers placed in the thickness direction are called z-fibers, z-yarn, warp weaver, or binder yarn for 3D woven fabrics. More than one layer of fabric is woven at the same time, and the z-fibers interlaces warp and fill yarns of different layers during the process. At the end of the weaving process, an integrated 3D woven structure, which has a considerable thickness, is produced.

After densification holes would be drilled in the zone containing z-fibers. The weaving frequency would be as such that holes will be disposed in the vicinity of a z-fiber reinforced region hence decreasing the probably of a crack propagation and connectivity between holes. This methodology would add a strengthening mechanism to the region surrounding a hole and prevent crack linkage between holes. Precise parameters such zone definition, weaving frequency and z-fiber tow size guidelines are determined prior layup.

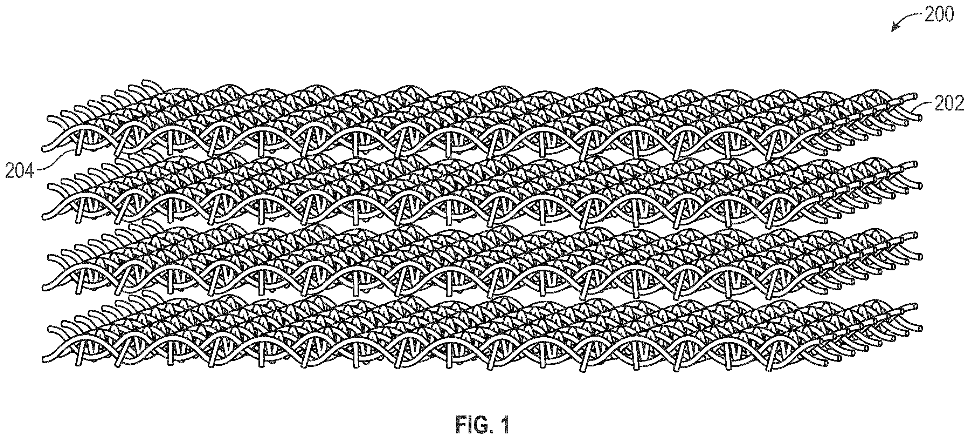

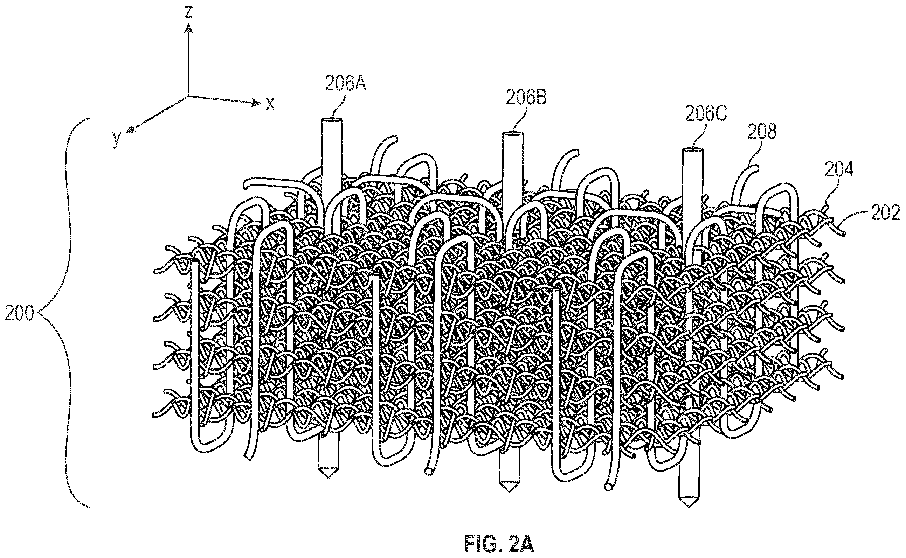

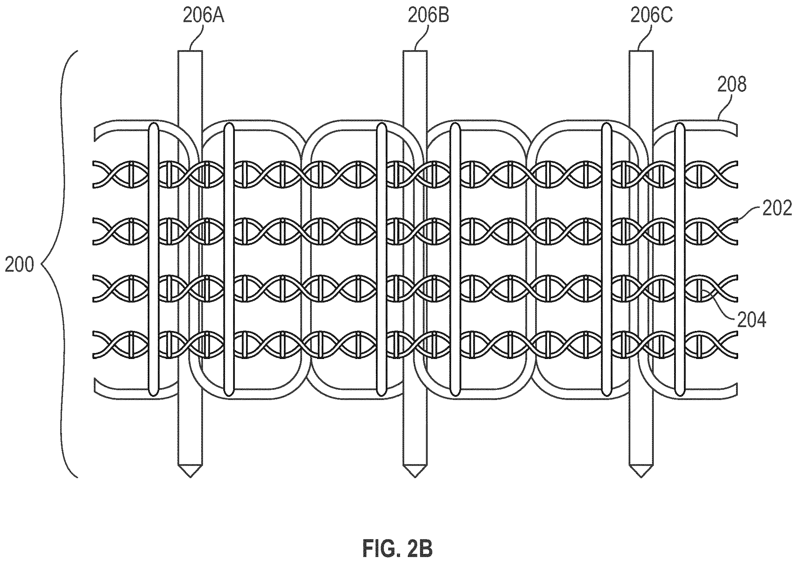

FIG. 1 depicts an exemplary collection of 4 2-D (2-dimensional) plies 200 (hereinafter a "plurality of plies") that have no cooling holes drilled in them. The plurality of plies comprise warp fibers 202 interwoven with fill fibers 204 that are woven to form a ply. FIGs. 2A and 2B depict the predetermined location of cooling holes around which the z-fibers are woven to reinforce the plurality of plies of the FIG. 1. FIG. 2A is an exemplary isometric view of the plurality of plies 200 of the FIG. 1, with drill bits 206A, 206B and 206C located at the places that the cooling holes will eventually be drilled. As may be seen in the FIG. 2A, the z-fibers 208 are disposed through the plurality of plies to reinforce regions around the to-be drilled cooling holes.

FIG. 2B is a side side view depiction of a portion of the z-fiber reinforced plurality of plies 200 which contains 3 drill bits - a first drill bit 206A, a second drill bit 206B and a third drill bit 206C, where each of these drill bits represents a location at which a cooling hole (a first cooling hole, a second cooling hole and a third cooling hole respectively) will be machined. While the FIG. 2B depicts a drill bit as a place holder for the cooling hole, any other component that has an exterior profile that is similar to the inner diameter of the cooling hole and can withstand the manufacturing temperatures may be used to eventually produce the cooling hole. From the FIGs. 2A and 2B, it may be seen that the z-fibers either enter the plurality of plies or exit the plurality of plies at a distance proximate to where the drill bit 206 will be used to drill the cooling holes.

The z-fibers enter the plurality of plies and traverse the plurality of plies 200 along the z-axis (which represents the thickness of the plies) that is typically concentric to the cooling hole drilled in the plurality of plies. In an example not covered by the claims, only a single z-fiber may traverse the thickness of the plurality of plies 200 (in the z-direction) at a region close to where the hole is to be drilled. According to the claimed invention, two or more z-fibers traverse the thickness of the plurality of plies 200 at a region proximate to where the hole is to be drilled. In yet another embodiment, three or more z-fibers may traverse the thickness of the plurality of plies 200 at a region proximate to where the hole is to be drilled. In an embodiment, the z-fibers may be symmetrically located or asymmetrically located about the cooling hole. A symmetrical arrangement implies that if the plurality of plies are cut along the z axis (the longitudinal axis) at a location where a drill bit is placed, then the image on one side of the drill bit is a mirror image of the other side of the drill bit.

According to the claimed invention, the z-fibers are disposed through the entire thickness of the plurality of plies (as depicted in the FIG. 2B) or according to an example not covered by the claimed invention, partially through the thickness of the plurality of plies (not shown). In the FIG. 2B, each z-fiber enters the plurality of plies at the bottom and traverses the entire group of plies to emerge at the top proximate the point at which the first cooling hole (as represented by the first drill bit 206A) will be drilled or alternatively, enters the plurality of plies at the top and traverses the entire group of plies to emerge at the bottom proximate the point at which the cooling hole will be drilled. Each fiber then respectively traverses the upper or lower surface of the plurality of plies and then re-enters the plurality of plies at the point proximate to where the next cooling hole is to be drilled. In the FIG. 2A, it may be seen that the z-fibers traverse the surface of the plurality of plies in both the x and y-directions. The z-direction is the thickness direction of the plurality of plies, while the x and y-directions are perpendicular to the z-direction.

While the FIGs. 2A and 2B depict the z-fiber as travelling through the entire plurality of plies in the z-direction, in an example not covered by the claims, the z-fibers can be woven through only a portion of the plurality of plies in the z-direction (not shown). In such example, a portion of the the z-fibers (used to reinforce the composite ply proximate to a drilled hole) can be woven through 25% or less of the plurality of plies. In another example, a portion of the the z-fibers (used to reinforce the composite ply proximate to a drilled hole) can be woven through 50% or less of the plurality of plies. In yet another example, a portion of the the z-fibers (used to reinforce the composite ply proximate to a drilled hole) can be woven through 75% or less of the plurality of plies.

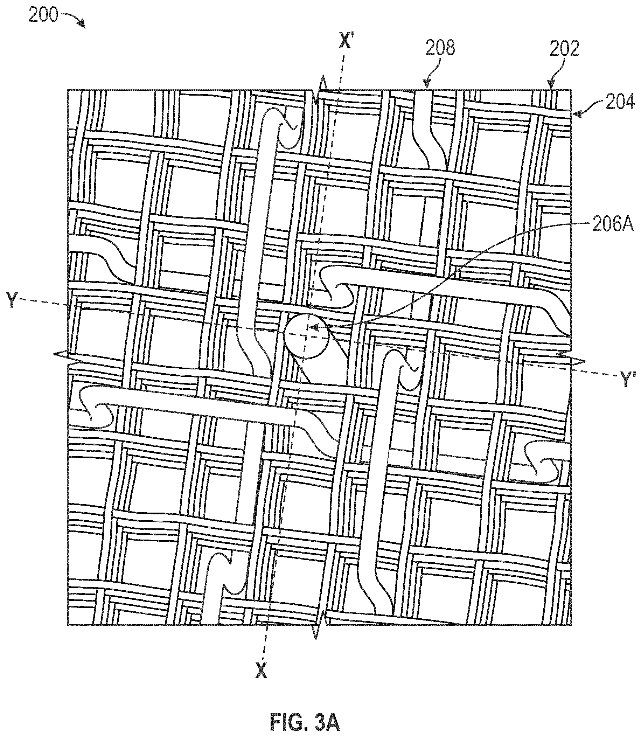

As noted above, the z-fibers may be symmetrically distributed through the ply around the to-be drilled cooling hole. FIG. 3A depicts an isometric top view of the plurality of plies 200 where the z-fibers are symmetrically distributed about drill bit 206A when viewed on either side of the section along XX' or YY'. If the plurality of plies are cut along the z axis (the longitudinal axis) along section XX' or YY', then the image on one side of the drill bit 206A (the location at which the cooling hole will eventually be drilled) is a mirror image of the other side of the drill bit. When the z-fibers are symmetrically distributed about the drill bit 206A, the respective z-fibers typically enter the ply at equal distances from the location at where the cooling hole is to be drilled. FIG. 3A also shows the z-fibers arranged in an alternating arrangement. Travelling clock-wise around the drill bit 206A, it may be seen that each of the z-fibers in succession enter from the bottom of the plurality of plies and travel to the top of the plurality of plies. This arrangement may be varied such that one or more of the z-fibers may travel from the top of the plurality of plies to the bottom of the plurality of plies, while the remaining z-fibers travel in the opposite direction from bottom to top.

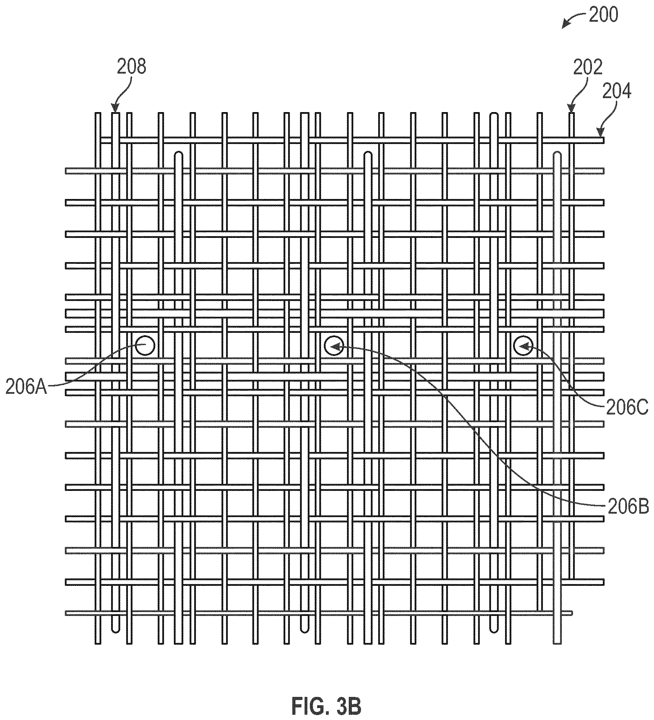

FIG. 3B is another top view of plurality of plies 200 shown in the FIGs. 2A and 2B. FIG. 3B provides a better view of the symmetrical layout of the z-fibers around each of the drill bits 206A, 206B and 206C. From the FIGs. 3A and 3B it may be seen that the drill bits are periodically spaced and the z-fibers follow a square wave function in the z and y direction. The number of z-fibers and the periodicity of the z-fibers determine the amount of reinforcement of the plies around the drill bit. It is to be noted that while the figures depict the square wave function in the z and y directions, any other combination of directions (e.g., x and y or x and z) are also possible. The periodicity varies with the stiffness of the ply. As periodicity increases the ply may be less stiff, while as periodicity decreases the ply becomes more stiff. It is to be noted that while the FIG. 3A depicts the z-fibers as being normal to the surface of the plurality of plies, this may not always be the case. Some of the z-fibers may be inclined to the surface of the plurality of plies. In an embodiment, there are many different types of z-fiber stitching patterns that may be implemented here (e.g., cross, running, whip, ladder, or the like, or a combination thereof). The z-fiber comprises one or more tows that can have one or more filaments. In an embodiment, a tow can comprise up to 500 filaments. In an embodiment, the z-fiber comprises 2 to 10 tows each of which comprise 5 to 20 filaments.

As may be seen from the FIGs. 2A. 2B, 3A and 3B, the method of reinforcing a ceramic matrix composite comprises determining a location of a first cooling hole in a plurality of plies. A first z-fiber is disposed in the plurality of plies at a location proximate to where the first cooling hole (or where the cooling holes) will be located; where the z-fiber enters the plurality of plies at either an upper surface or a lower surface. The z-fiber traverses the plurality of plies in the z-direction proximate to the first cooling hole and traverses the plurality of plies in an x or y direction further away from the first cooling hole. The z-direction is in the thickness direction of the plurality of plies and where the x and y-direction are perpendicular to the z-direction.

The z-fiber typically traverses the plurality of plies in the z-direction proximate to the cooling holes and traverses the plurality of plies in the x-direction, the y-direction or both the x and y-direction when located further away from the cooling holes. The z-fiber may also traverse the plurality of plies in the z-direction at locations that are not proximate to the cooling hole. In an example, the z-fiber traverses the plurality of plies in the x-direction or the y-direction in between two plies (i.e., in the interior of the plurality of plies). In an embodiment, the z-fiber traverses the plurality of plies in the x-direction or the y-direction on an outer surface of the plurality of plies. In another embodiment, the z-fiber penetrates the plurality of plies from an outer surface in a periodic manner. In another embodiment, the z-fiber penetrates the plurality of plies from an outer surface in an aperiodic manner.

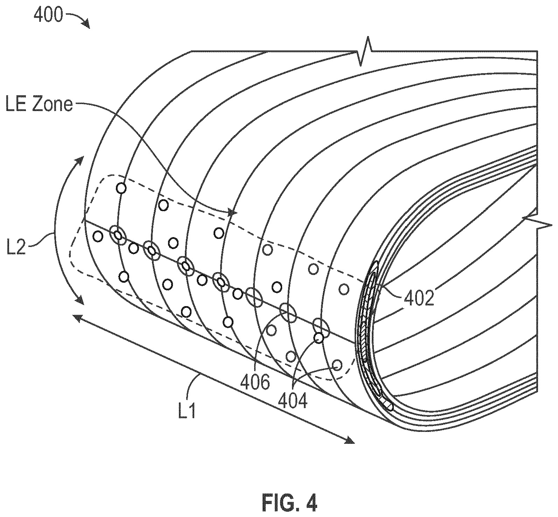

FIG. 4 depicts the use of z-fibers in the leading edge of a turbine blade. FIG. 4 represents a leading edge of an airfoil 400 of length L1 and radius of curvature L2, where a region 402 that comprises cooling holes 406 and non-cooling hole 404. The cooling holes 406 are present horizontally at a tip of the leading edge. The non-cooling holes 404 represent a possible zone of z-fiber locations and an example of a distributed spread of z-fibers around a region of interest. Due to discrepancies in final z-fiber location (after CVI) in reference to the intended drilled hole location, a larger area of the airfoil may be needed to be populated with z-fibers to increase the likelihood that final drilled holes may lie between z-fibers. The FIG. 4 shows more or less 3 rows of z-fiber holes (the non-cooling holes 404) and their placement variation. The center airfoil line shows intended cooling hole locations (406).

In one embodiment, in one method of manufacturing a component with cooling holes, the location of the cooling holes is first determined. The cooling holes are generally located between warp and fill fibers so as to preferably not disturb the fibers. The location of the z-fibers is also determined prior the layup process. The plies are layed up and the z-fibers are disposed into the layup prior to precursor infiltration. After the z-fibers are disposed into the layup, the layup is subjected to precursor infiltration.
After precursor infiltration, the machine tool (used to form the cooling hole, such as, for example, a drill bit) is removed leaving behind a cooling hole.

Precursor infiltration may be conducted via chemical vapor infiltration, polymer infiltration pyrolysis or melt infiltration. Chemical vapor infiltration (CVI) is a ceramic engineering process whereby matrix material is infiltrated into fibrous preforms by the use of reactive gases at elevated temperature to form fiber-reinforced composites. CVI can be applied to the production of carbon-carbon composites and ceramic-matrix composites. Chemical vapor infiltration (CVI) can potentially be used at temperatures of up to and greater than 2700°F (1482°C). Polymer infiltration pyrolysis (PIP) comprises the infiltration of a low viscosity polymer into the fiber structure, followed by pyrolysis. Under pyrolysis, the polymer precursor is heated in an inert atmosphere and transformed into a ceramic due to its decomposition. Melt infiltration is based on the infiltration of porous matrices with the melt of an active phase or precursor.

After the densification of the precursors has occurred, the cooling holes are drilled into the ply. Z-fiber reinforcement is advantageous for its ability to increase the through-the-thickness strength of advanced composite laminates, joints and structural interfaces.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the claims.

In addition, many modifications may be made to adapt a particular situation or material to the teachings of the present disclosure without departing from the claims.

Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of reinforcing a composite preform comprising:
determining a location of a first cooling hole (406) and a second cooling hole (406) in a plurality of plies (200); where the cooling hole (406) is configured to transport a cooling gas;
disposing a z-fiber (208) in the plurality of plies (200) at a location proximate to where the first cooling hole (406) will be located; where the z-fiber (208) enters the plurality of plies (200) at either an upper surface or a lower surface; and
where the z-fiber (208) traverses a portion of the plurality of plies (200) in the z-direction proximate to where the first cooling hole (406) will be located; and traverses the plurality of plies (200) in an x or y direction further away from the first cooling hole (406); where the z-direction is in the thickness direction of the plurality of plies (200) and where the x and y-direction are perpendicular to the z-direction,
**characterised in that**:
the method comprises a first z-fiber (208) and a second z-fiber (208);
the first z-fiber (208) enters the plurality of plies (200) at the bottom, or alternatively at the top, and traverses the plurality of plies (200) to emerge at the top, or respectively the bottom, proximate the point at which the first cooling hole (406) will be drilled, and then traverses the upper surface, or respectively lower surface, in the x direction and then re-enters the plurality of plies (200) to emerge at the bottom, or respectively top, and then traverses the lower surface, or respectively top surface, in the x direction of the plurality of plies;
the second z-fiber (208) enters the plurality of plies (200) at the bottom, or alternatively at the top, and traverses the plurality of plies (200) to emerge at the top, or respectively the bottom, proximate the point at which the first cooling hole (406) will be drilled and then traverses the upper surface, or respectively lower surface, in the y direction, and then re-enters the plurality of plies (200) to emerge at the bottom, or respectively top, an then traverses the lower surface, or respectively top surface, in the y direction of the plurality of plies (200); and
the method further comprises drilling the cooling holes (406) after introduction of the first and second z-fibers (208).

2. The method of claim 1, further comprising disposing a ceramic precursor into the composite to form a ceramic matrix composite.

3. The method of claim 2, wherein the disposing of the ceramic precursor into the composite occurs after the cooling holes (406) are drilled.

4. The method of claim 2 or 3, further comprising removing a machine tool (206A; 206B; 206C) from the composite from the ceramic matrix composite to leave behind a reinforced cooling hole (406).

5. The method of claim 2 or of claim 3 or 4 as dependent on claim 2, wherein the disposing of the ceramic precursor into the composite comprises chemical vapor infiltration, polymer infiltration pyrolsis or melt infiltration.

6. An article (400) comprising:
a preform comprising a plurality of plies (200);
a ceramic matrix encompassing the preform; wherein the preform comprises two or more cooling holes (406); and
a first z-fiber (208) disposed in the preform proximate to the cooling holes (406); where the first z-fiber (208) traverses a portion of the plurality of plies (200) in the z-direction proximate to a first cooling hole (406), and traverses the plurality of plies (200) in an x or y direction further away from the first cooling hole (406), where the z-direction is in the thickness direction of the plurality of plies (200) and where the x and y-direction are perpendicular to the z-direction,
**characterised in that**:
the article (400) comprises a second z-fiber (208);
the first z-fiber (208) enters the plurality of plies (200) at the bottom, or alternatively at the top, and traverses the plurality of plies (200) to emerge at the top, or respectively the bottom, proximate the first cooling hole (406) and then traverses the upper surface, or respectively the lower surface in the x direction, and then re-enters the plurality of plies (200) to emerge at the bottom, or respectively top, and then traverses the lower surface, or respectively top surface in the x direction of the plurality of plies (200); and
the second z-fibre (208) enters the plurality of plies at the bottom, or alternatively at the top, and traverses the plurality of plies (200) to emerge at the top, or respectively the bottom, proximate the first cooling hole (406) and then traverses the upper surface, or respectively the lower surface in the y direction, and then re-enters the plurality of plies (200) to emerge at the bottom, or respectively top, and then traverses the lower surface, or respectively top surface in the y direction of the plurality of plies (200).

7. The method or article of any preceding claim, wherein the z-fiber (208) penetrates the plurality of plies (200) from the outer surface in a periodic manner.

8. The method or article of any preceding claim, wherein the z-fiber (208) penetrates the plurality of plies (200) from the outer surface in an aperiodic manner.

9. The article of any of claims 6 to 8, wherein the z-fiber (208) traverses the entire plurality of plies (200) in the z-direction proximate to the first cooling hole (406) or to the two or more cooling holes (406).

10. The article of any of claims 6 to 9, wherein the article (400) is a turbine blade.

## Patentansprüche

1. Verfahren zum Verstärken einer Verbundstoffvorform, umfassend:
Bestimmen eines Standorts eines ersten Kühllochs (406) und eines zweiten Kühllochs (406) in einer Vielzahl von Lagen (200); wobei das Kühlloch (406) dazu konfiguriert ist, ein Kühlgas zu transportieren;
Anordnen einer Z-Faser (208) in der Vielzahl von Lagen (200) an einem Standort in der Nähe der Stelle, an der das erste Kühlloch (406) lokalisiert sein wird; wobei die Z-Faser (208) entweder an einer oberen Oberfläche oder einer unteren Oberfläche in die Vielzahl von Lagen (200) eintritt; und
wobei die Z-Faser (208) einen Teil der Vielzahl von Lagen (200) in der Z-Richtung in der Nähe der Stelle durchquert, an der das erste Kühlloch (406) lokalisiert sein wird; und die Vielzahl von Lagen (200) in einer X- oder Y-Richtung weiter entfernt von dem ersten Kühlloch (406) durchquert; wobei die Z-Richtung in der Dickenrichtung der Vielzahl von Lagen (200) verläuft und wobei die X- und Y-Richtung senkrecht zu der Z-Richtung verlaufen,
**dadurch gekennzeichnet, dass**:
das Verfahren eine erste Z-Faser (208) und eine zweite Z-Faser (208) umfasst;
die erste Z-Faser (208) in die Vielzahl von Lagen (200) unten oder alternativ oben eintritt und die Vielzahl von Lagen (200) durchquert, um oben oder jeweils unten in der Nähe des Punktes, an dem das erste Kühlloch (406) gebohrt wird, auszutreten, und dann die obere Oberfläche oder jeweils die untere Oberfläche in der X-Richtung durchquert und dann wieder in die Vielzahl von Lagen (200) eintritt, um unten oder jeweils oben auszutreten, und dann die untere Oberfläche oder jeweils die obere Oberfläche in der X-Richtung der Vielzahl von Lagen durchquert;
die zweite Z-Faser (208) in die Vielzahl von Lagen (200) unten oder alternativ oben eintritt und die Vielzahl von Lagen (200) durchquert, um oben oder jeweils unten in der Nähe des Punktes, an dem das erste Kühlloch (406) gebohrt wird, auszutreten, und dann die obere Oberfläche oder jeweils die untere Oberfläche in der Y-Richtung durchquert und dann wieder in die Vielzahl von Lagen (200) eintritt, um unten oder jeweils oben auszutreten, ein dann die untere Oberfläche oder jeweils die obere Oberfläche in der Y-Richtung der Vielzahl von Lagen (200) durchquert; und
das Verfahren ferner Bohren der Kühllöcher (406) nach Einführen der ersten und zweiten Z-Faser (208) umfasst.

2. Verfahren nach Anspruch 1, ferner umfassend Anordnen eines Keramikvorläufers in dem Verbundstoff, um einen Keramikmatrixverbundstoff zu bilden.

3. Verfahren nach Anspruch 2, wobei das Anordnen des Keramikvorläufers in dem Verbundstoff erfolgt, nachdem die Kühllöcher (406) gebohrt sind.

4. Verfahren nach Anspruch 2 oder 3, ferner umfassend Entfernen einer Werkzeugmaschine (206A; 206B; 206C) aus dem Verbundstoff aus dem Keramikmatrixverbundstoff, um ein verstärktes Kühlloch (406) zurückzulassen.

5. Verfahren nach Anspruch 2 oder Anspruch 3 oder 4, soweit von \Anspruch 2 abhängig, wobei das Anordnen des Keramikvorläufers in den Verbundstoff chemische Gasphaseninfiltration, Polymerinfiltrationpyrolse oder Schmelzinfiltration umfasst.

6. Artikel (400), umfassend:
eine Vorform, die eine Vielzahl von Lagen (200) umfasst;
eine Keramikmatrix, die die Vorform umgibt; wobei die Vorform zwei oder mehr Kühllöcher (406) umfasst; und
eine erste Z-Faser (208), die in der Vorform in der Nähe der Kühllöcher (406) angeordnet ist; wobei die erste Z-Faser (208) einen Teil der Vielzahl von Lagen (200) in der Z-Richtung in der Nähe eines ersten Kühllochs (406) durchquert, und die Vielzahl von Lagen (200) in einer X- oder Y-Richtung weiter entfernt von dem ersten Kühlloch (406) durchquert, wobei die Z-Richtung in der Dickenrichtung der Vielzahl von Lagen (200) verläuft und wobei die X- und Y-Richtung senkrecht zu der Z-Richtung verlaufen,
**dadurch gekennzeichnet, dass**:
der Artikel (400) eine zweite Z-Faser (208) umfasst;
die erste Z-Faser (208) in die Vielzahl von Lagen (200) unten oder alternativ oben eintritt und die Vielzahl von Lagen (200) durchquert, um oben oder jeweils unten in der Nähe des ersten Kühllochs (406) auszutreten, und dann die obere Oberfläche oder jeweils die untere Oberfläche in der X-Richtung durchquert und dann wieder in die Vielzahl von Lagen (200) eintritt, um unten oder jeweils oben auszutreten, und dann die untere Oberfläche oder jeweils die obere Oberfläche in der X-Richtung der Vielzahl von Lagen (200) durchquert; und
die zweite Z-Faser (208) in die Vielzahl von Lagen unten oder alternativ oben eintritt und die Vielzahl von Lagen (200) durchquert, um oben oder jeweils unten in der Nähe des ersten Kühllochs (406) auszutreten, und dann die obere Oberfläche oder jeweils die untere Oberfläche in der Y-Richtung durchquert und dann wieder in die Vielzahl von Lagen (200) eintritt, um unten oder jeweils oben auszutreten, und dann die untere Oberfläche oder jeweils die obere Oberfläche in der Y-Richtung der Vielzahl von Lagen (200) durchquert.

7. Verfahren oder Artikel nach einem der vorhergehenden Ansprüche, wobei die Z-Faser (208) die Vielzahl von Lagen (200) von der äußeren Oberfläche aus periodisch durchdringt.

8. Verfahren oder Artikel nach einem der vorhergehenden Ansprüche, wobei die Z-Faser (208) die Vielzahl von Lagen (200) von der äußeren Oberfläche aus aperiodisch durchdringt.

9. Artikel nach einem der Ansprüche 6 bis 8, wobei die Z-Faser (208) die gesamte Vielzahl von Lagen (200) in der Z-Richtung in der Nähe des ersten Kühllochs (406) oder der zwei oder mehr Kühllöcher (406) durchquert.

10. Artikel nach einem der Ansprüche 6 bis 9, wobei der Artikel (400) eine Turbinenschaufel ist.

## Revendications

1. Procédé de renforcement d'une préforme composite consistant à :
déterminer l'emplacement d'un premier trou de refroidissement (406) et d'un second trou de refroidissement (406) dans une pluralité de couches (200) ; dans lequel le trou de refroidissement (406) est configuré pour transporter un gaz de refroidissement ;
disposer une fibre z (208) dans la pluralité de couches (200) à un emplacement à proximité de l'emplacement où sera situé le premier trou de refroidissement (406) ; dans lequel la fibre z (208) pénètre dans la pluralité de couches (200) soit par une surface supérieure, soit par une surface inférieure ; et
dans lequel la fibre z (208) traverse une partie de la pluralité de couches (200) dans la direction z à proximité de l'emplacement où sera situé le premier trou de refroidissement (406) ; et traverse la pluralité de couches (200) dans une direction x ou y encore plus à l'opposé du premier trou de refroidissement (406) ; dans lequel la direction z est dans la direction de l'épaisseur de la pluralité de couches (200) et dans lequel les directions x et y sont perpendiculaires à la direction **z,**
**caractérisé en ce que** :
le procédé comprend une première fibre z (208) et une seconde fibre z (208) ;
la première fibre z (208) pénètre dans la pluralité de couches (200) par le bas, ou alors par le haut, et traverse la pluralité de couches (200) pour ressortir par le haut, ou respectivement par le bas, à proximité du point où sera percé le premier trou de refroidissement (406), et puis traverse la surface supérieure, ou respectivement la surface inférieure, dans la direction x et puis pénètre de nouveau dans la pluralité de couches (200) pour ressortir par le bas, ou respectivement par le haut, et puis traverse la surface inférieure, ou respectivement la surface supérieure, dans la direction x de la pluralité de couches ;
la seconde fibre z (208) pénètre dans la pluralité de couches (200) par le bas, ou alors par le haut, et traverse la pluralité de couches (200) pour ressortir par le haut, ou respectivement par le bas, à proximité du point où sera percé le premier trou de refroidissement (406) et puis traverse la surface supérieure, ou respectivement la surface inférieure, dans la direction y et puis pénètre de nouveau dans la pluralité de couches (200) pour ressortir par le bas, ou respectivement par le haut, et puis traverse la surface inférieure, ou respectivement la surface supérieure, dans la direction y de la pluralité de couches (200) ; et
le procédé consiste en outre à percer les trous de refroidissement (406) après l'introduction des première et seconde fibres z (208).

2. Procédé selon la revendication 1, consistant en outre à disposer un précurseur de céramique dans le composite pour former un composite à matrice céramique.

3. Procédé selon la revendication 2, dans lequel la disposition du précurseur de céramique dans le composite se produit après le perçage des trous de refroidissement (406).

4. Procédé selon la revendication 2 ou 3, comprenant en outre le retrait d'une machine-outil (206A ; 206B ; 206C) du composite à partir du composite à matrice céramique pour laisser un trou de refroidissement renforcé (406).

5. Procédé selon la revendication 2 ou selon la revendication 3 ou 4 telle que dépendante de la revendication 2, dans lequel la disposition du précurseur de céramique dans le composite comprend une infiltration chimique en phase vapeur, une pyrolyse par infiltration de polymère ou une infiltration de matière fondue.

6. Article (400) comprenant :
une préforme comprenant une pluralité de couches (200) ;
une matrice céramique englobant la préforme ; dans lequel la préforme comprend deux trous de refroidissement ou plus (406) ; et
une première fibre z (208) disposée dans la préforme à proximité des trous de refroidissement (406) ; dans lequel la première fibre z (208) traverse une partie de la pluralité de couches (200) dans la direction z à proximité d'un premier trou de refroidissement (406), et traverse la pluralité de couches (200) dans une direction x ou y encore plus à l'opposé du premier trou de refroidissement (406), dans lequel la direction z est dans la direction de l'épaisseur de la pluralité de couches (200) et dans lequel les directions x et y sont perpendiculaires à la direction z,
**caractérisé en ce que** :
l'article (400) comprend une seconde fibre z (208) ;
la première fibre z (208) pénètre dans la pluralité de couches (200) par le bas, ou alors par le haut, et traverse la pluralité de couches (200) pour ressortir par le haut, ou respectivement par le bas, à proximité du premier trou de refroidissement (406), et puis traverse la surface supérieure, ou respectivement la surface inférieure, dans la direction x et puis pénètre de nouveau dans la pluralité de couches (200) pour ressortir par le bas, ou respectivement par le haut, et puis traverse la surface inférieure, ou respectivement la surface supérieure, dans la direction x de la pluralité de couches (200) ; et
la seconde fibre z (208) pénètre dans la pluralité de couches par le bas, ou alors par le haut, et traverse la pluralité de couches (200) pour ressortir par le haut, ou respectivement par le bas, à proximité du premier trou de refroidissement (406), et puis traverse la surface supérieure, ou respectivement la surface inférieure, dans la direction y et puis pénètre de nouveau dans la pluralité de couches (200) pour ressortir par le bas, ou respectivement par le haut, et puis traverse la surface inférieure, ou respectivement la surface supérieure, dans la direction y de la pluralité de couches (200).

7. Procédé ou article selon une quelconque revendication précédente, dans lequel la fibre z (208) pénètre dans la pluralité de couches (200) à partir de la surface extérieure d'une manière périodique.

8. Procédé ou article selon une quelconque revendication précédente, dans lequel la fibre z (208) pénètre dans la pluralité de couches (200) à partir de la surface extérieure d'une manière apériodique.

9. Article selon l'une quelconque des revendications 6 à 8, dans lequel la fibre z (208) traverse la totalité de la pluralité de couches (200) dans la direction z à proximité du premier trou de refroidissement (406) ou des deux trous de refroidissement ou plus (406).

10. Article selon l'une quelconque des revendications 6 à 9, dans lequel l'article (400) est une aube de turbine.
